# EUROPEAN PATENT SPECIFICATION

(11) **EP 3 480 009 B1**
(45) Date of publication and mention of the grant of the patent: **23.06.2021**
(21) Application number: 18203319.1
(22) Date of filing: 30.10.2018
(51) Int. Cl.: B32B 7/00, B32B 15/04, B32B 37/00, H01F 7/02, H01F 41/02

(54) **A METHOD FOR SEGMENTATION ND-FE-B PERMANENT MAGNETS**
VERFAHREN ZUR SEGMENTIERUNG VON ND-FE-B-PERMANENTMAGNETEN
PROCÉDÉ DE SEGMENTATION D'AIMANTS PERMANENTS ND-FE-B

(30) Priority: 01.11.2017 CN 201711056569
(43) Date of publication of application: 08.05.2019
(73) Proprietor: Yantai Shougang Magnetic Materials Inc., 265500 Yantai (CN)
(72) Inventor: Jia, Daoning, Yantai City, 265500 (CN); Peng, Zhongjie, Yantai City, 265500 (CN); Liu, Guangyang, Yantai City, 265500 (CN)
(74) Representative: Gulde & Partner

(56) References cited:
- EP-A1- 3 029 693
- CN-A- 107 799 292
- CN-U- 207 353 081
- JP-A- 2017 022 312
- US-A1- 2004 046 469

## Description

The present invention relates to Nd-Fe-B magnets adhesive technology, specifically to a segmentation method of Nd-Fe-B magnets.

### Technical Background

Recently, with the development of electric engines for vehicles and generators for wind power constructions, Nd-Fe-B magnets forming one of the main parts of these devices are needed, which allow working with a high speed. However, eddy current will be produced during the high-speed operation in the magnet and then heat up the Nd-Fe-B magnets, which leads to the magnet demagnetization. Adopting the method of segmenting Nd-Fe-B magnets block and then bonding together with adhesive, each magnet is an independent body and insulate each other can effectively reduce eddy current loss and reduce the temperature of magnets at work.

Traditional methods of segmenting the Nd-Fe-B magnets use glass beads mixed together with adhesives. Then, the glass beads and the adhesives are applied to the surfaces of the Nd-Fe-B magnets. A clamping tool apparatus is used to sandwich of the Nd-Fe-B magnets together. However, there are many drawbacks associated with the traditional method. Specifically, mixing the glass beads reduces the strength of the adhesives. When sandwiching the Nd-Fe-B magnets, some of the glass beads may move or be crushed, this makes it difficult to maintain the insulation characteristics between the Nd-Fe-B magnets. And the excessive glue cannot be removed. Therefore, it is difficult to control the product quality

EP3029693 A1 disclosed a method of bonding Nd-Fe-B permanent magnets, comprising: a) degreasing and activating adhesion surfaces of the Nd-Fe-B permanent magnets; b) coating an insulating adhesive on the adhesion surfaces of the magnets such that a thickness of an adhesive layer is 1 to 100µm; c) initial curing the insulating adhesive at a temperature T1 of 20°C to 250°C for 0.1 h to 24h; d) stacking the magnets together in a fixing tool (4) and curing the insulating adhesive under pressure of 0.1 MPa to 10 MPa and a temperature T2 of 150°C to 350°C for 0.1h to 12h; and e) stop heating and allow to cool down the bonded magnets to room temperature.

### Summary of Invention

The present invention overcomes the shortages of the existing technologies, and provides a method for segmentation Nd-Fe-B magnets. The invention solves the problems existing in the current insulation and uniformity of the glue thickness.

According to the present invention there is provided a method of segmentation Nd-Fe-B magnets. The method includes the steps as follows:
a) Pickling and phosphating or sandblasting the surface of Ne-Fe-B magnets to remove rust and oil stains;
b) Degreasing and activating the treated surfaces of the Nd-Fe-B magnets;
c) Dot-coating an insulating adhesive on the surfaces of Nd-Fe-B magnets, wherein the number of dots is more than 3;
d) Putting the Nd-Fe-B magnets into an oven and curing at a temperature from 20°C to 200°C for 0.1h to 24h;
e) Degreasing and activating the treated surfaces of the Nd-Fe-B magnets;
f) Apply an insulating adhesive on the surfaces of Nd-Fe-B magnets;
g) Stacking the Nd-Fe-B magnets together with a fixture tool and curing the insulating adhesive under pressure of 0.1Mpa to 20Mpa and a temperature from 20°C to 200°C;
h) Cutting the bonded Nd-Fe-B magnets to a target size; and
i) Coating the surfaces of the segmented Nd-Fe-B magnets.

According to an embodiment, the Nd-Fe-B magnets of step a) are sintered Nd-Fe-B permanent magnets.

According to another embodiment, alcohol or acetone is used to degrease the surfaces of Nd-Fe-B magnets and then activating treatment surfaces of Nd-Fe-B magnets with low temperature plasma or plasma flame is followed in step b) and step c).

The adhesive may be a resin adhesive.

According to another embodiment, the height of the dispensing adhesive after curing is 0.03mm to 0.5mm in step d).

According to another embodiment, 2 to 50 Nd-Fe-B magnets are stacked together in step g) and the thickness of adhesive is the height of the dispensing adhesive of step d).

According to another embodiment, slicing, multiple wire cutting and wire-electrode cutting is adopted to cut the bonded magnets along the direction of adhesive bonding into 2 to 50 segments in step h).

According to another embodiment, surface treatment includes phosphating and spraying in step i).

The inventive method for segmentation Nd-Fe-B magnets has outstanding beneficial features compared with common methods:
a) Dispensing on the surfaces of Nd-Fe-B magnets will harden after curing, which can ensure insulation between the magnets that apply an insulating adhesive on the surfaces of Nd-Fe-B magnets and it can improve the controllability of the layer thickness.
b) By means of the segmentation of Nd-Fe-B magnets, the bonded semi-finished products can be segmented again. This can result in more than one finished product, improving efficiency, and can dispose of the excessive adhesive around.

The present disclosure further provides an apparatus of segmentation Nd-Fe-B magnets useful for performing the above mentioned method for segmentation Nd-Fe-B magnets. The apparatus includes a frame. A convex platform is located at a bottom of the frame. A limit device is provided in a medial portion of the frame. The limit device is arranged above the convex platform. A pulling device is located at the top of the frame. An upper end of the pulling device runs through the frame. A round head is located at a lower end of the pulling device. A holding spring is put in the upper part of pulling device. The holding spring is located between the frame and the round head.

### Brief Description of the Drawings

- Fig.1: schematically illustrates an arrangement of two Nd-Fe-B magnets being bonded together by an adhesive.
- Fig.2: schematically illustrates an apparatus useful for the method for segmentation Nd-Fe-B magnets.
- Fig.3: schematically illustrates the segmenting step of the method.

### Detail Description the Invention

The present invention will now be described in exemplary embodiments, which however should not be construed to be limiting.

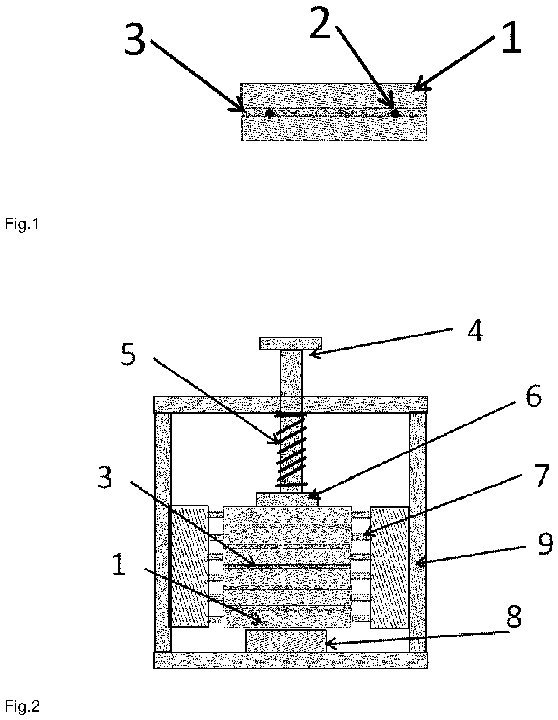

Fig.1 schematically illustrates an arrangement of two Nd-Fe-B magnets 1 being bonded together by an adhesive 3. Further, adhesive dots 2 are illustrated.

Referring to Fig 2, a frame 9 is made according to design requirements. A convex platform 8 is located at a bottom of the frame 9. A limit device 7 is arranged at the medal surface of the frame 9. The limit device 7 is arranged above the convex platform. A pulling device 4 is located at the top of the frame 9. An upper end of the pulling device 4 runs through the frame. A round head 6 is located at the lower end of the pulling device 4. The holding spring 5 is put in the lower part of pulling device 4. The holding spring 5 is located between the frame 9 and the round head 6.

The Nd-Fe-B magnets with adhesive on the surface to be fixed together are placed piece by piece on the convex platform 8 and the Nd-Fe-B magnets are fixed in their position by means of the limit device 7, which ensures that the Nd-Fe-B magnets do not move during fixture. Excessive and spillage adhesive will not touch the limit device 7. The pulling device 4 is released after the Nd-Fe-B magnets are put in place such that the spring 5 is pressing the round head 6 against the stack of magnets with a pressure in the range of 0.1 to 20 Mpa.

### Example 1

Square shape sintered Nd-Fe-B permanent magnets are provided. The surface of the Nd-Fe-B magnets is pickled with nitric acid (5%), and then phosphating the Nd-Fe-B magnet is followed.

The Nd-Fe-B permanent magnets 1 are degreased with alcohol, activated with plasma flame for 1min, then one of the bonding surfaces is dotted with four points with the adhesive 2 as shown in figure 1. Then the magnets are put into the oven for curing under the temperature of 20°C for 24h, and after curing, the height of dispensing is 0.03mm, which can be varied according to the demands.

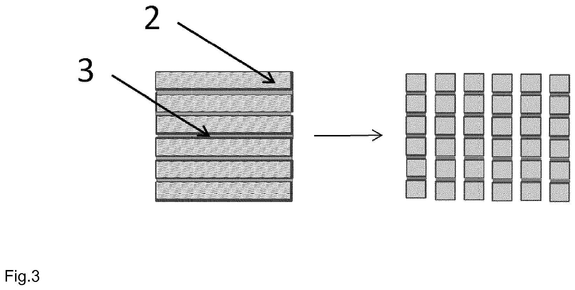

The Nd-Fe-B permanent magnets 1 are degreased with alcohol again, activated with plasma flame for 1min, then applied with adhesive 3. The six pieces of Nd-Fe-B magnets according to the illustrated embodiment are stacked together, and put into the apparatus described above and shown in figure 2. The Nd-Fe-B magnets are squeezed under the pressure of 0.1Mpa and then put into the oven to curing under the temperature of 20°C for 24h. The bonded Nd-Fe-B magnet stack is removed after curing and cut by using a slicer into six equal parts as shown in figure 3. Then phosphating is followed to produce the target products.

### Example 2

Sintered Nd-Fe-B permanent magnets are provided. The surface of the Nd-Fe-B magnets is pickled with nitric acid (3%), and then phosphating the Nd-Fe-B magnet is followed.

The Nd-Fe-B permanent magnets 1 are degreased with acetone, activated with low-temperature plasma for 10mins, then one of the bonding surfaces is dotted with six points with the adhesive 2 as shown in figure 1. Then the magnets are put into the oven for curing under the temperature of 200°C for 0.1h, and after curing, the height of dispensing is 0.05mm.

The Nd-Fe-B permanent magnets 1 are degreased with acetone again, activated with low-temperature plasma for 10mins, then applied with adhesive 3. Fifty pieces of Nd-Fe-B magnets according are stacked together, and put into the apparatus described above and shown in figure 2. The Nd-Fe-B magnets are squeezed under the pressure of 20Mpa and then put into the oven to curing under the temperature of 200°C for 0.1h. The bonded Nd-Fe-B magnet stack is removed after curing and cut by using multiple wire cutting into two equal parts. Then spraying is followed to produce the target products.

### Example 3

Sintered Nd-Fe-B permanent magnets are provided. The surface of the Nd-Fe-B magnets is pickled with nitric acid (5%), and then phosphating the Nd-Fe-B magnet is followed.

The Nd-Fe-B permanent magnets 1 are degreased with acetone, activated with low-temperature plasma for 5mins, then one of the bonding surfaces is dotted with four points with the adhesive 2 as shown in figure 1. Then the magnets are put into the oven for curing under the temperature of 150°C for 1.5h, and after curing, the height of dispensing is 0.1mm.

The Nd-Fe-B permanent magnets 1 are degreased with acetone again, activated with low-temperature plasma for 10mins, then applied with adhesive 3. Two pieces of Nd-Fe-B magnets according are stacked together, and put into the apparatus described above and shown in figure 2. The Nd-Fe-B magnets are squeezed under the pressure of 1Mpa and then put into the oven to curing under the temperature of 150°C for 1.5h. The bonded Nd-Fe-B magnet stack is removed after curing and cut by using multiple wire cutting into fifty equal parts. Then spraying is followed to produce the target products.

## Claims

1. A method for segmentation Nd-Fe-B magnets including the steps as follows:
a) Pickling and phosphating or sandblasting the surface of Ne-Fe-B magnets to remove rust and oil stains;
b) Degreasing and activating the treated surfaces of the Nd-Fe-B magnets;
c) Dot-coating an insulating adhesive on the surfaces of Nd-Fe-B magnets, wherein the number of dots is more than 3;
d) Putting the Nd-Fe-B magnets into an oven and curing at a temperature from 20°C to 200°C for 0.1h to 24h;
e) Degreasing and activating the treated surfaces of the Nd-Fe-B magnets;
f) Apply an insulating adhesive on the surfaces of Nd-Fe-B magnets;
g) Stacking the Nd-Fe-B magnets together with a fixture tool and curing the insulating adhesive under pressure of 0.1Mpa to 20Mpa and a temperature from 20°C to 200°C;
h) Cutting the bonded Nd-Fe-B magnets to a target size; and
i) Coating the surfaces of the segmented Nd-Fe-B magnets.

2. The method of claim 1, wherein the Nd-Fe-B magnets are sintered Nd-Fe-B permanent magnets.

3. The method of claim 1, wherein alcohol or acetone is used to degrease the surfaces of Nd-Fe-B and then the surfaces of Nd-Fe-B magnets are the activated with low temperature plasma or plasma flame in step b).

4. The method of claim 1, wherein the height of the dispensing adhesive after curing is 0.03 to 0.5mm in step d).

5. The method of claim 1, wherein 2 to 50 Nd-Fe-B magnets are stacked together in step g) and a thickness of the adhesive is a height of the dispensed adhesive of step d).

6. The method of claim 1, wherein slicing, multiple wire cutting and wire-electrode cutting is adopted to cut bonded magnets along the direction of adhesive bonding into 2 to 50 segments in step h).

7. The method of claim 1, wherein the surface coating includes phosphating and spraying in step i).

## Patentansprüche

1. Verfahren zur Segmentierung von Nd-Fe-B-Magneten, das die Schritte wie folgt enthält:
a) Abbeizen und Phosphatieren oder Sandstrahlen der Oberfläche von Ne-Fe-B-Magneten zum Entfernen von Rost und Ölflecken;
b) Entfetten und Aktivieren der behandelten Oberflächen der Nd-Fe-B-Magneten;
c) Punktbeschichten und Isolieren eines Klebers auf den Oberflächen von Nd-Fe-B-Magneten, wobei die Anzahl von Punkten mehr als 3 beträgt;
d) Anordnen der Nd-Fe-B-Magnete in einem Ofen und Aushärten bei einer Temperatur von 20 °C bis 200 °C über 0,1 Std. bis 24 Std;
e) Entfetten und Aktivieren der behandelten Oberflächen der Nd-Fe-B-Magnete;
f) Anwenden eines isolierenden Klebers auf den Oberflächen von Nd-Fe-B-Magneten;
g) Stapeln der Nd-Fe-B-Magnete mit einem Befestigungswerkzeug und Aushärten des isolierenden Klebers unter Druck von 0,1 MPa bis 20 MPa und einer Temperatur von 20 °C bis 200 °C;
h) Schneiden der verbundenen Nd-Fe-B-Magnete zu einer Zielgröße; und
i) Beschichten der Oberflächen der segmentieren Nd-Fe-B-Magnete.

2. Verfahren nach Anspruch 1, wobei die Nd-Fe-B-Magnete gesinterte Nd-Fe-B-Permanentmagnete sind.

3. Verfahren nach Anspruch 1, wobei Alkohol oder Aceton verwendet wird, um die Oberflächen von Nd-Fe-B zu entfetten und dann die Oberflächen von Nd-Fe-B-Magneten mit Niedrigtemperatur-Plasma oder Plasmaflamme in Schritt b) aktiviert werden.

4. Verfahren nach Anspruch 1, wobei die Höhe des Abgabe-Klebers nach dem Aushärten 0,03 bis 0,5 mm in Schritt d) ist.

5. Verfahren nach Anspruch 1, wobei 2 bis 50 Nd-Fe-B-Magnete in Schritt g) gestapelt werden und eine Dicke des Klebers eine Höhe des ausgegebenen Klebers des Schritts d) ist.

6. Verfahren nach Anspruch 1, wobei Abschneiden, multiples Drahtschneiden und Drahtelektroden-Schneiden zum Schneiden von verbundenen Magneten entlang der Richtung des Adhäsionsklebens in 2 bis 50 Segmente in Schritt h) erfolgen.

7. Verfahren nach Anspruch 1, wobei die Oberflächenbeschichtung Phosphatieren und Besprühen in Schritt i) enthält.

## Revendications

1. Procédé de segmentation d'aimants Nd-Fe-B comprenant les étapes suivantes:
a) décapage et phosphatation ou sablage de la surface des aimants Ne-Fe-B pour éliminer les taches de rouille et d'huile;
b) dégraissage et activation des surfaces traitées des aimants Nd-Fe-B;
c) revêtement par points d'un adhésif isolant sur les surfaces d'aimants Nd-Fe-B, dans lequel le nombre de points est supérieur à 3;
d) disposition des aimants Nd-Fe-B dans un four et durcissement à une température de 20 °C à 200 °C pendant 0.1h à 24h,
e) dégraissage et activation des surfaces traitées des aimants Nd-Fe-B;
f) application d'un adhésif isolant sur les surfaces des aimants Nd-Fe-B;
g) empilage des aimants Nd-Fe-B avec un outil de fixation et durcissement de l'adhésif isolant sous une pression de 0,1 Mpa à 20 Mpa et à une température de 20 °C à 200 °C;
h) découpage des aimants Nd-Fe-B liés à une taille cible; et
i) revêtement des surfaces des aimants Nd-Fe-B segmentés.

2. Procédé selon la revendication 1, dans lequel les aimants Nd-Fe-B sont des aimants permanents Nd-Fe-B frittés.

3. Procédé selon la revendication 1, dans lequel de l'alcool ou de l'acétone est utilisé pour dégraisser les surfaces de Nd-Fe-B puis les surfaces d'aimants Nd-Fe-B sont activées avec un plasma à basse température ou une flamme de plasma à l'étape b).

4. Procédé selon la revendication 1, dans lequel la hauteur de l'adhésif de distribution après durcissement est 0,03 à 0,5 mm à l'étape d).

5. Procédé selon la revendication 1, dans lequel 2 à 50 aimants Nd-Fe-B sont empilés ensemble à l'étape g) et une épaisseur de l'adhésif est une hauteur de l'adhésif distribué de l'étape d).

6. Procédé selon la revendication 1, dans lequel le tranchage, le découpage multiple de fil et le découpage de fil-électrode sont adoptés pour couper des aimants liés le long de la direction de liaison adhésive en 2 à 50 segments à l'étape h).

7. Procédé selon la revendication 1, dans lequel le revêtement de surface comprend la phosphatation et la pulvérisation à l'étape i).
